Europäisches Patentamt

European Patent Office

Office européen des brevets

(11) Publication number: **0 180 319**
**B1**

(12) **EUROPEAN PATENT SPECIFICATION**

(45) Date of publication of patent specification: **15.03.89**

(51) Int. Cl.⁴: **C 09 D 5/02**, C 09 D 5/34

(21) Application number: **85306801.3**

(22) Date of filing: **25.09.85**

(54) Washout resistant coating or caulking compositions and applications thereof.

(30) Priority: **01.10.84 US 656198**

(43) Date of publication of application:
**07.05.86 Bulletin 86/19**

(45) Publication of the grant of the patent:
**15.03.89 Bulletin 89/11**

(84) Designated Contracting States:
**AT BE CH DE FR GB IT LI LU NL SE**

(56) References cited:
**EP-A-0 121 656**
**DE-B- 922 429**
**FR-A-1 549 166**
**GB-A- 212 823**
**GB-A-2 005 697**
**US-A-4 243 416**

(73) Proprietor: **ROHM AND HAAS COMPANY**
**Independence Mall West**
**Philadelphia Pennsylvania 19105 (US)**

(72) Inventor: **Jordan, Arthur David**
**810 Longfield Road**
**Philadelphia Pennsylvania 19118 (US)**

(74) Representative: **Angell, David Whilton et al**
**ROHM AND HAAS (UK) LTD. European**
**Operations Patent Department Lennig House 2**
**Mason's Avenue**
**Croydon CR9 3NB (GB)**

Courier Press, Leamington Spa, England.

**Description**

This invention is concerned with water-based coating or caulking compositions and applications thereof especially though not exclusively, to compositions which, upon application to an exterior surface or seam, quickly develop resistance to being washed out by unexpected rain.

Water-based coating and caulking compositions have been formulated using aqueous dispersions of water-insoluble latex polymer as binders. After application to an exterior surface or seam, the aqueous carrier evaporates over a period of time, and the individual latex particles coalesce to form an integral mass. However, known water-based compositions are particularly vulnerable for a period of time immediately after their application to water damage, for example a sudden shower may wash away or otherwise damage the coating or caulk.

It is therefore desirable to reduce the period of time for which such compositions are vulnerable to water damage.

In accordance with the present invention, a coating or caulking composition comprises an aqueous dispersion of water-insoluble latex polymer binder prepared by emulsion polymerization, pigment dispersed with anionic polymer, and water-soluble salt of multivalent metal complex ion having ligands selected from ammonia or organic amine and wherein the total solids content of the composition is from 50% to 90% by weight.

Preferably the total solids content of the composition is from 60% to 85% by weight.

The compositions of the present invention exhibit rapid washout resistance; that is, they may resist being washed out or otherwise damaged by rain or by other natural or simulated precipitation more rapidly after application of the coating or caulking composition than many previously known otherwise comparable compositions.

While the applicants are not to be bound by theoretical considerations, it is believed that this rapid washout resistance is the result of multivalent metal ion precipitation of anionic polymer used to disperse pigment and that the multivalent metal ions become available for such precipitation by dissociation of the multivalent metal complexion.

Suitable ligands include those which, when dissociated from the multivalent metal ion, are somewhat volatile. In addition, the rate constant for dissociation of the multivalent metal complex ion into multivalent metal ion and ligand is desirably somewhat large. On application of the composition to an exterior surface or seam, the surface area exposed to the atmosphere permits the relatively volatile, dissociated ligand to escape from the composition into the environment. The relatively large rate constant for dissociation of the multivalent metal complex ion assures the continued dissociation of the complex and replenishment of the supply of dissociated ligand in the composition near the surface exposed to the atmosphere, which in turn continues to lose ligand to the environment. As the concentration of multivalent metal complex ion decreases in the composition, the concentration of dissociated multivalent metal ion increases, eventually achieving a concentration effective to destabilize and precipitate the anionic polymers used as pigment dispersants in the composition.

The multivalent metal ion is preferably a transition metal ion, however, any of the following multivalent metal ions may be used either alone or in combination with one another: Zn(II), Zr(II), Fe(II), Fe(III), V(III), V(II), Co(II), Mn(II), Ca(II), Mg(II), Ba(II), Sr(II), Cd(II), Cu(II) and Pb(II). Zn(II) is preferred.

Preferably, where the ligand is an organic amine, it is one or more of methylamine, dimethylamine, trimethylamine, ethylamine, isopropylamine and n-propylamine, although this does not exclude the use of any other suitable organic amine.

Preferably the water soluble salt of multivalent metal complex ion is selected from zinc ammonium bicarbonate, zinc ammonium accetate or zinc ammonium nitrate although this does not exclude the use of any other suitable water soluble salt of the multivalent metal complex ion or mixtures of water soluble multivalent metal complex salts.

Zinc ammonium complex ion is a well-known crosslinking agent for polymeric binders bearing carboxylate groups and it is unavoidable that some such crosslinking occurs when ammonia is given up by the compositions of the present invention which may contain polymer latex binder with carboxylate functionality. However, the presence of such polymer latex in the coating composition is not a necessary condition for these compositions to achieve early washout resistance, and carboxylate-free binders may be used.

It is often convenient to dissolve the water-soluble salt in water prior to addition to the coating or caulking composition. Such solutions may optionally contain excess ammonia. The water-soluble salt of multivalent metal complex ion may be mixed with the aqueous dispersion of water-insoluble polymer latex which serves as the coating or caulk binder. The polymer latex dispersion containing the added salt may be used subsequently to prepare roof mastics, caulks, sealants, or other coating compositions. Alternative methods of incorporating the multivalent metal complex will be readily apparent to those skilled in the coatings formulation art, for example forming the multivalent metal complex in situ. The invention also provides a process for coating or caulking an exterior surface or seam with the coating or caulking composition.

The amount of multivalent metal complex salt required to yield an improvement in the washout resistance of the exterior coating, roof mastic, caulk or sealant composition depends on the amount of

EP 0 180 319 B1

anionic pigment dispersant employed in preparing the composition, which in turn depends on the amount and type of pigment employed. The ratio of total equivalents of charge of multivalent metal ion to the total equivalents of anionic charge borne by the polymer dispersant is at least 0.5, and may be from 0.8 to 1.5. It is preferable however for the complex salt to be added in sufficient amounts to give approximately one equivalent of complex ion per equivalent of anionic charge on the polymeric dispersant.

The aqueous dispersions of water-insoluble latex polymer used in the compositions of the present invention are prepared by emulsion polymerization. Emulsion polymerization techniques are discussed in detail in D. C. Blackey, *Emulsion Polymerization* (Wiley, 1975). Any monomer mixture which yields water-insoluble polymer latex which is dispersible in water may be used. For example, vinyl acetate, which itself has appreciable water-solubility as a monomer, may be employed, as homopolymers of vinyl acetate are water-insoluble. Acrylic monomers such as the alkyl esters of acrylic acid and methacrylic acid are preferred. Examples of acrylic monomers which may be used to prepare the latex polymers of the present invention include the $(C_1-C_8)$-alkyl esters of acrylic acid and the $(C_1-C_8)$-alkyl esters of methacrylic acid, such as methyl methacrylate, methyl acrylate, ethyl acrylate, ethyl methacrylate, n-butyl methacrylate, n-butyl acrylate, 2-ethylhexyl acrylate, n-octyl acrylate, sec-butyl acrylate, isobutyl methacrylate, and cyclopropyl methacrylate.

Minor amounts of *alpha, beta*-ethylenically unsaturated monomers with appreciable water-solubility, such as acrylic acid, methacrylic acid, itaconic acid, citraconic acid, acrylamide and methacrylamide, may also be used in preparing the emulsion polymers. The copolymerization of such water-soluble monomers with water-insoluble monomers often confers desirable properties upon the resulting copolymer, such as long-term latex stability, despersability and increased adhesion to specific substrates.

Acidic monomers which may be used in preparing the emulsioins are *alpha, beta*-monoethylenically unsaturated acids such as maleic, fumaric, aconitic, crotonic, citraconic, acryloxypropionic and higher oligomers of acrylic, acrylic, methacrylic, and itaconic acids.

Further examples of acidic monoethylenically unsaturated monomers which may be copolymerized to form the water-insoluble addition polymers are partial esters of unsaturated aliphatic dicarboxylic acids and particularly, the alkyl half esters of such acids. Examples of such partial esters are alkyl half esters or itaconic acid, fumaric acid, and maleic acid wherein the alkyl group contains 1 to 6 carbon atoms. Representative numbers of this group of compounds include methyl acid itaconate, butyl acid itaconate, ethyl acid fumarate, butyl acid fumarate, and methyl acid maleate.

The latex polymers may be prepared from a *alpha, beta*-ethylenically unsaturated aromatic monomer, such as styrene, vinyl toluene, 2-bromo-styrene, o-bromo-styrene, p-chloro-styrene, o-methoxy styrene, p-methoxy-styrene, allyphenyl ether, allytolyl ether, and *alpha*-methyl styrene.

The latex polymers may also be prepared from polar or polarizable nonionogenic hydrophilic monomer, such as acrylonitrile, methacrylonitrile, cis- and trans-crotonitrile, *alpha*-cyanostyrene, *alpha*-chloroacrylonitrile, ethyl vinyl ether, isopropyl vinyl ether, isobutyl vinyl ether, and butyl vinyl ether, diethylene glycol vinyl ether, decyl vinyl ether, vinyl acetate, hydroxyalkyl(meth)- acrylates, such as 2-hydroxyethyl methacrylate, 2-hydroxyethyl acrylate, 3-hydroxypropyl methacrylate, butanediol acrylate, 3-chloro-2-hydroxy-propyl acrylate, 2-hydroxypropyl acrylate, 2-hydroxypropyl methacrylate, and vinyl thiols such as 2-mercaptopropyl methacrylate, 2-sulphoethyl methacrylate, methyl vinyl sulphide, and propyl vinyl sulphide.

The latex polymers may be prepared from monomeric vinyl ester in which the acid moiety of the ester is selected from the aromatic and $(C_1-C_{18})$ aliphatic acids. Examples of such acids include formic, acetic, propionic, n-butyric, n-valeric, palmitic, stearic, phenyl acetic, benzoic, chloroacetic, dichloroacetic, *gamma*-chloro butyric, 4-chlorobenzoic, 2,5-dimethylbenzoic, o-toluic, 2,4,5-trimethoxy benzoic, cyclobutane carboxylic, cyclohexane, carboxylic, 1-(p-methoxy phenyl)cyclohexane carboxylic, 1-(p-tolyl)-1-cyclopentane carboxylic, hexanoic, myristic, and p-toluic acids.

The latex polymers may also be prepared from multifunctional monomers such as allyl methacrylate, divinyl benzene, diethylene glycol dimethacrylate, ethylene glycol dimethacrylate, 1,6-hexanediol diacrylate, 1,3-butylene glycol dimethacrylate, trimethylol propane triacrylate and trimethylol propane trimethacrylate.

Conventional emulsion polymerization techniques may be used to prepare the latext polymers employed in the compositions of this invention. The monomer may be emulsified with 0.5% to 10% by weight of total monomers of an anionic or nonionic dispersing agent. Acidic monomers are water soluble and thus serve as dispersing agents which aid in emulsifying the other monomers used. A polymerization initiator of the free radical type, such as ammonium or potassium persulfate, may be used alone or in conjunction with an accelerator, such as potassium metabisulphite or sodium thiosulphate. The initiator and accelerator, commonly referred to as catalysts, may be used in proportions of 0.5% to 2% each based on the weight of monomers to be copolymerized. Thermal and redox processes may be used. The polymerization temperature may be from room temperature up to 90°C. Batch, gradual addition, continuous and multiple stage proceses may be used.

Examples of emulsifiers which are suited to the polymerization process used to prepared the latext polymers include alkaline metal and ammonium salts of alkyl, aryl, alkaryl, and aralkyl sulphonates, sulphates, and polyether sulphates; and corresponding phosphates and phosphonates; and alkoxylated fatty acids, esters, alcohols, amines, amides; and alkylphenols.

3

Chain transfer agents, including mercaptans, polymercaptans, and polyhalogen compounds are often desirable in the polymerization mixture to control polymer molecular weight.

The relative amount of polymer latex and pigment used in the compositions of the present invention depends on the desired application. The weight ratio of pigment to binder is from 1:1 to 5:1, but is preferably from 1:1 to 4:1 depending upon the desired application. Especially in the case of a roof mastic for example, the pigment-to-binder ratio is from 1:1 to 3:1, but the preferred ratio is 2:1. It is desirable to maintain the pigment volume concentration below the critical pigment volume concentration.

The word "pigment" includes both materials which are used to impart aesthetic and functional qualities, for example rutile and anatase titanium dioxide, and materials which are used to fill the compositions, for example calcium carbonate ("fillers").

Pigments may be selected from rutile and anatase titanium dioxide, calcite, limestone, mica, talc, asbestos fiber or powder, diatomaceous earth, barytes, alumina, slate flour, calcium silicate, clay, colloidal silica, magnesium carbonate, magnesium silicate, zinc oxide and mixtures thereof.

The pigment used in the compositions of this invention is dispersed with anionic polymer, for example polyphosphate and/or acrylic polymer used as dispersing aid and for stabiliszing the dispersions. Preferred acrylic polymers include copolymers of acrylic acid and/or methacrylic acid with lower i.e. $(C_1-C_4)$-alkyl acrylates as dispersants. Preferred polyphosphates include sodium and/or potassium tripolyphosphate as dispersants.

The amount of dispersant used depends on the surface area of the pigment employed per unit volume of the composition. The amount is easily determinable by those skilled in the coatings art by conventional techniques.

Other suitable anionic polymer dispersants include "condensed" phosphates, that is, dehydrated polymerized orthophosphate in which the $H_2O$ to $P_2O_5$ ratio is less than 3 to 1; sulfonated polymers, including naphthalene- formaldehyde sulfonated polycondensates; polymaleates; natural product-derived dispersants, such as tannins, lignins, alginates, gluconates, glucosides and organic phosphonates including methylene phosphonates. The particular type and amount of dispersant employed depends on the pigment types and grades selected.

The pH of the compositions of the present invention must be adjusted so that it is high enough to prevent premature gellation, for example, during storage. Indeed, it is surprising that compositions of the present invention having such high solids content can actually be made since it would be expected that premature gellation would occur during mixing of the composition even at high pH. The compositions are stable when the pH is above 10.0 but preferably the pH is substantially 10.3. Washout resistance may not be obtained in some formulations with an initial pH of 9.5 or less.

The compositions of the present invention may be thickened using conventional thickeners as desired. For example cellulosic thickeners such as methyl cellulose and hydroxyethyl cellulose may be used. Other types of thickeners and rheology modifiers, such as associative hydrophobic alkali soluble emulsions may also be used. The amount of thickener employed depends on the type of product to be prepared, the pigment/binder ratio of the composition, the type and grade of thickener used or the application technique to be used.

The compositions of the present invention optionally include ingredients such as can preservatives, antimicrobial agents, mildewicides, anti-freeze agents, coalescents, defoaming agents, colorants, dyes, cosolvets, plasticizers and adhesion promoters.

The compositions of this invention are particularly useful as washout resistant coatings for exterior surfaces, especially when applied to horizontal or nearly-horizontal surfaces such as roofs. These compositions known as roof mastics, are used to protect formed-in-place polyurethane foam coatings for existing roofs where a protective coating in the order of 0.05-0.10 cm thick is required or they may be applied over built-up roofing formed from roofing felts and asphat or tar. For a general description of elastomeric roof mastics, see Roham and Haas Company publication 83E4 (Feb.1982) "The Elastomeric Roof Market 1981" and L. S. Frankel et al., "Extending the Line of Acrylic Binders for Elastomeric Roof Mastics," *Resin Review* V.32 (No. 4, 1983).

In addition, when formulated at appropriate pigment-to-binder ratios and with appropriate rheology-controlling additives the compositions of the present invention may be employed as latex caulks and sealants.

A variety of application techniques may be employed with the compositions of the present invention. To some extent, the application technique depends on the viscosity and rheology of the composition. The roof mastics of the present invention have a viscosity of approximately 80—120 Ku (Krebs Units) which is somewhat greater than exterior latex paints and they are conventionally applied by spray techniques such as by airless spray. Other techniques such as application by brush, roller, electrostatic spray, etc., may also be used as appropriate. Caulks, having a dough-like consistency, may be applied by gunning.

TEST METHODS

Washout Resistance — Roof Mastics

Coatings of roof mastic 0.01 cm thick (wet) are prepared on aluminium plates (7.6 cm × 15.2 cm). The coatings are dried at approximately 50% relative humidity, at 22°C for various times (dry time) beginning at five minutes and at five or ten minute-increments thereafter. This is done by preparing five coated plates at

# EP 0 180 319 B1

one time, then selecting and testing a particular coated plate having the desired dry time. At each dry time the coating is subjected to a fine spray of water from a hand-powered household sprayer. The spray is repeated at thirty second intervals for a total of ten times. A coating is considered to pass the test (i.e. have good washout resistance) at a given dry time if water running from the coating contains no white redispersed composition after it has been sprayed ten times. A coating is considered to fail the test (i.e. have poor washout resistance) at a given dry time if water running from the coating contains white redispersed composition after any one of the ten water sprays.

## Washout Resistance — Caulks

Slabs of caulk 0.32 cm thick (wet) and having dimensions of 2.5 cm × 8.9 cm are prepared on aluminium plates approximately 7.6 cm × 15.2 cm. The caulk slabs are dried at approximately 50% relative humidity, at 22°C for various times (dry time) beginning at five minutes, then ten minutes, fifteen minutes, and at fifteen minute increments thereafter. This is done by preparing several coated plates at a time, then selecting and testing a particular coated slate having the desired dry time. At each dry time, the aluminium plate bearing the caulk slab is totally immersed in water for twenty-four hours and then rated for resistance to redispersion. A caulk slab is considered to "pass" the test when it resists redispersion for twenty four hours.

## Consistency — Caulks

A sample of compound and a 6-ounce(170 g)-polyethylene cartridge are conditioned for at least 16 hours at standard conditions. At the end of the conditioning period the cartridge with plunger in place is filled to capacity with compound from the nozzle end, and placed in an air-powered caulking gun. A nozzle with a ⅛-inch(0.3175 cm) diameter orifice is attached to the cartridge. The compound is then gunned at 50 psi (345 × 10³ PA) pressure into an empty container while a stopwatch is used to time the extrusion through the orifice. Gunning time is recorded in seconds.

The present invention is illustrated by the following examples.

## Preparation of the Latex Polymer

Polymer A is prepared by emulsion polymerization using standard techniques. The resulting aqueous dispersion of latex polymer, having total solids of 55% by weight of polymer A, is formed from polymerisation of the following monomer composition: Butyl acrylate, 36.35% by weight, acrylonitrile, 2% by weight, methacrylic acid, 1.65% by weight. The polymer is prepared by the gradual addition of an anionic surfactant-stabilized monomer emulsion to a seed emulsion at 80—80°C. Free radical polymerization is catalyzed by $NA_2S_2O_8$ cofeed during polymerization. The resulting polymer latex is chased with redox catalyst to reduce residual monomer.

## Roof Mastic Preparation

Roof mastics are prepared according to Formulation I below.

### Roof Mastic Formulation I

| Ingredient | Function | Weight (g) |
|---|---|---|
| Water | carrier | 178.1 |
| Hydroxyethyl cellulose | thickener | 4.4 |
| Anionic polymer (OROTAN 850) | dispersant | 5.0 |
| Ethylene glycol | coalescent | 15.6 |
| NOPCO NXZ | defoamer | 2.0 |
| KTPP | dispersant | 1.5 |
| Calcium carbonate | filler pigment | 443.4 |
| Zinc oxide | reactive pigment/stabilizer | 49.3 |
| Titanium oxide | hiding/reflective pigment | 73.9 |

The above ingredients are combined and ground for 15 minutes on a high speed dispenser. The grind is let down at low speed with the following ingredients:

5

| Ingredient | Weight (g) |
|---|---|
| Polymer A (binder) | 431.4 |
| Coalescent | 7.3 |
| SKANE M—8 (mildewicide) | 2.2 |
| Defoamer | 2.0 |
| TRITON X—405 (nonionic surfactant) | 5.5 |
| $NH_4OH$ | 1.0 |
| Water | 41.1 |

Caulk Preparation

Caulks are prepared according to Formulation II below.

Caulk Formulation II

| Ingredient | Function | Weight (g) |
|---|---|---|
| Polymer A | binder | 522.20 |
| Antimicrobial | preservative | .11 |
| TRITON X—405 | nonionic surfactant | 10.50 |
| Ethylene glycol | coalescent | 2.90 |
| Hydroxyethyl cellulose | thickener | 5.80 |
| Sodium polyphosphate | pigment dispersant | 6.30 |
| OROTAN 850 | pigment dispersant | 1.50 |
| Calcium carbonate | pigment | 734.60 |
| Titanium oxide | pigment | 16.50 |

Caulk Formulation II cont.

The ingredients above are added to a sigma-blade mixer and mixed at high shear for 75 minutes. The following ingredients are then added and mixing is continued for an additional 10 minutes.

| | | |
|---|---|---|
| Mineral thinner (VARSOL No. 1) | cosolvent | 29.60 |
| Silance 7—6040 | glass adhesion promoter | 0.42 |

Finally, the following defoamer is added and mixing is continued for an additional 5 minutes to reduce entrained air.

| | |
|---|---|
| NOPCO NXY | 1.10 |

6

Preparation of Zinc Ammonium Complex Solutions
Solutions of soluble zinc ammonium complexes are prepared according to the following formulae:

| Zinc ammonium bicarbonate | (8.4% zinc) |
|---|---|
| Water | 2.80 g |
| Ammonium bicarbonate | 74.4 g |
| Zinc oxide | 62.0 g |
| Ammonium hydroxide | 176.0 g |
| Zinc ammonium acetate | (8.42% zinc) |
| Water | 21.8 g |
| Zinc acetate (dihydrate) | 28.2 g |
| Ammonium hydroxide | 50.0 g |
| Zinc ammonium nitrate | 8.4% zinc) |
| Zinc nitrate (hexahydrate) | 40.3 g |
| Ammonium hydroxide | 59.7 g |

Comparative Test 1

A roof mastic is prepared according to Roof Mastic Formulation I above. The resulting mastic has an initial consistency of 89 K.U. (Krebs Units) measured on a Stormer viscometer and requires 80 minutes dry time to develop washout resistances using the test method described above. The consistency after 30 days at 50°C is 85 K.U. The long dry time to develop washout resistance is typical of aqueous roof mastics prepared and used heretofore.

Example 1

A roof mastic is prepared according to comparative Test 1 above except that 41.1 g of water is replaced with 41.1 g of zinc ammonium bicarbonate solution. This roof mastic has an initial consistency of 88 K.U., a consistency after 30 days at 50°C of 96 K.U., and requires 10 to 20 minutes dry time to develop washout resistance. This example illustrates the effect of added zinc complex on washout resistance of a roof mastic.

In the alternative, the metal complex may be generated *in situ*. For example, addition of ammonium bicarbonate and additional ammonium hydroxide to Roof Mastic Formulation I will result in formation of the zinc ammonium complex ion, as zinc oxide is already a component of the mastic formulation and is available as a source of zinc ions.

Comparative Test 2

A roof mastic is prepared according to Roof Mastic Formulation I except that the OROTAN 850 dispersant content is 9.6 g and KTPP is omitted. The amount of OROTAN 850 dispersant is set to keep the number of equivalents of anionic dispersant the same as in Comparative Example 1. This roof mastic has a consistency of 89 K.U. and requires 80 minutes dry time to develop washout resistance. The consistency after 30 days at 50°C is 90 K.U.

Example 2

A roof mastic is prepared exactly as in Comparative Test 2 except that 41.1 g of water is replaced by 41.1 g of zinc ammonium bicarbonate solution. This roof mastic has an initial consistency of 89 K.U. and requires 20 minutes dry time to develop washout resistance. The consistency after 30 days at 50°C is 96 K.U. This example shows that early washout resistance can be obtained in a roof mastic containing only polycarboxylate pigment dispersant.

Comparative Test 3

A roof mastic is prepared according to Roof Mastic Formulation I. The KTPP content is 3.1 g and OROTAN 850 dispersant is omitted. The amount of KTPP is set to keep the number of equivalents of anionic dispersant the same as in Comparative Example 1. This roof mastic has an initial consistency of 89 K.U. and requires 100 minutes dry time to develop washout resistance. The consistency after 30 days at 50°C is 89 K.U.

7

## Example 3

A roof mastic is prepared exactly as in Comparative Test 3 except that 41.1 g of water is replaced by 41.1 g of zinc ammonium bicarbonate solution. This roof mastic has an initial consistency of 105 K.U. and requires 5 minutes dry time to develop washout resistance. The consistency after 30 days at 50°C is 136 K.U. The higher initial consistency of this roof mastic may indicate marginal stability, as does the relatively large increase in viscosity during storage at elevated temperature. This example shows that early washout resistance can be produced in a roof mastic containing only a polyphosphate pigment dispersant.

## Example 4

A roof mastic was prepared exactly as in Example 1 except that only 10.3 g of water is replaced by zinc ammonium bicarbonate solution. This roof mastic has an initial consistency of 82 K.U. and requires 80 minutes dry time to develop washout resistance. The consistency after 30 days at 50°C is 79 K.U. This comparative example shows that an amount of zinc complex only twenty-five percent of that of Example 1 is inadequate to improve washout resistance in the specific roof mastic formulation used in this case.

## Example 5

A roof mastic is prepared as in Example 1 except that only 15.5 g of water is replaced by zinc ammonium bicarbonate solution. This roof mastic has an intitial consistency of 80 K.U. and requires 70 minutes dry time to develop washout resistance. The consistency after 30 days at 50°C is 80 K.U. This example shows that an amount of zinc complex only thirty-seven and one half percent of that of Example 2 is inadequate to make a great improvement in washout resistance in this specific roof mastic formulation, although there is a small improvement.

## Example 6

A roof mastic is prepared as in Example 1 except that only 20.5 g of water is replaced by zinc ammonium bicarbonate solution. This roof mastic has an intitial consistency of 84 K.U. and requires 50 minutes to develop washout resistance. The consistency after 30 days at 50°C is 85 K.U. This example shows that the lower limit for zinc complex to produce a significant reduction in time to give improved washout resistance in this specific roof mastic formulation is approximately one-half equivalent based on anionic matter in the roof mastic.

## Example 7

A roof mastic is prepared exactly as in Example 1 except that 41.1 g of water is omitted and 82.2 g of zinc ammonium bicarbonate solution is added. This roof mastic has an intitial consistency of 79 K.U. and requires 5 minutes dry time to develop washout resistance. The consistency after 30 days at 50°C is 89 K.U. This example shows that an excess of zinc complex gives no improvement in washout resistance over that produced by equal equivalents of zinc and anions based on total anionic matter in the roof mastic.

## Example 8

A roof mastic is prepared exactly as in Example 1 except that 41.1 g of zinc ammonium nitrate solution is used instead of 41.1 g of zinc ammonium bicarbonate solution. This roof mastic has an intitial consistency of 83 K.U. and requires 5 minutes dry time to develop washout resistance. The consistency after 30 days at 50°C is 93 K.U. This example shows that other zinc ammonium complex salts can be substituted for zinc ammonium bicarbonate with retention of early washout resistance.

## Example 9

A roof mastic is prepared exactly as in Example 1 except that 41.1 g of zinc ammonium acetate solution is used instead of 41.1 g of zinc ammonium bicarbonate. This roof mastic has an intitial consistency of 84 K.U. and requires 5 minutes dry time to develop washout resistance. The consistency after 30 days at 50°C is 90 K.U. This example also shows that other zinc ammonium complex salts can be substituted for zinc ammonium bicarbonate with retention of early washout resistance.

## Comparative Test 4

A caulk is prepared according to Caulk Formation II. The caulk has a measured consistency of 10.4 seconds and requires greater than 90 minutes to develop washout resistance.

## Example 10

A caulk is prepared according to Caulk Formulation II except that the following additional ingredients are added to the initial mix:

| | |
|---|---|
| Zinc oxide | 10.20 g |
| Ammonium bicarbonate | 12.20 |
| Ammonium hydroxide | 29.00 |

8

and that the level of cellulosic thickener is raised to 8.70 g to maintain caulk consistency approximately the same as that of Comparative Test 4.

These components are added in the same ratio as is used to prepare solution of the complex salt. Generation of the complex *in situ* rather than addition as a solution has the advantage of minimizing the reduction in caulk solids. This caulk has a consistency of 8.4 seconds and requires 5 to 10 minutes to develop washout resistance.

the following words are trade marks which may or may not be registered in some or all of the designated states:

OROTAN is a trade mark of Rohm and Haas Company.

OROTAN 850 dispersant is a sodium salt of a carboxylated polyelectrolyte.

NOPCO is a trade mark of Diamond Shamrock Corp.

SILANE 7—6040 is a trade mark of Dow Corning Corp.

SKANE is a registered trade mark of Rohm and Haas Company.

TRITON is a registered trade mark of Rohm and Haas Company.

TRITON X-405 surfactant is an octylphenol polyether alcohol.

VARSOL is a trade mark of Exxon Corp., Houston, TX.

**Claims:**

1. A coating or caulking composition comprising an aqeuouos dispersion of water-insoluble latex polymer binder prepared by emulsion polymerization, pigment dispersed with anionic polymer, and water soluble salt of multivalent metal complex ion of Zn(II), Ze(II), Fe(II), Fe(III), V(III), V(II), Co(II), Co(II), Mn(II), Ca(II), Mg(II), Ba(II), Sr(II), Cd(II), Cu(II) and/or Pb(II) having ligands selected from ammonia or organic amine, wherein the total solids content of the composition is from 50% to 90% by weight, wherein the weight ratio of pigment to binder is from 1:1 to 5:1, and wherein the pH of the composition is greater than 9.5

2. A composition as claimed in claim 1, wherein the total solids content of the composition is from 60% to 85% by weight.

3. A composition as claimed in claim 1 or claim 2, wherein the multivalent metal comprises transition metal.

4. A composition as claimed in claim 3, wherein the transition metal is zinc.

5. A composition as claimed in claim 4, wherein the water soluble salt comprises zinc ammonium bicarbonate, zinc ammonium nitrate and/or zinc ammonium acetate.

6. A composition as claimed in any one of the preceding claims, wherein the pH of the composition is at least 10.0, preferably about 10.3.

7. A composition as claimed in any one of the preceding claims, wherein the weight ratio of pigment to binder is from 1:1 to 4:1.

8. A composition as claimed in any one of the preceding claims, wherein the anionic polymer dispersant comprises polyphosphate and/or acrylic polymer, preferably copolymer of acrylic and/or methacrylic acid with alkyl acrylate monomer.

9. A composition as claimed in any one of the preceding claims suitable for us as a roof mastic wherein the pigment to binder ratio is from 1:1 to 3:1.

10. A process for coating or caulking an exterior surface or seam by applying to an exterior surface or seam the coating or caulking composition claimed in any one of claims 1 to 8.

**Patentansprüche**

1. Beschichtungs- oder Abdichtungsmasse aus eine wässrigen Dispersion eines wasserunlöslichen Latex-Polymer-Binde-mittels, hergestellt durch Emulsionspolymerisation, einem Pigment, das mit einem anionischen Polymeren dispergiert ist und einem wasserlöslichen Salz eines mehrwertigen Metallkomplexions von Zn(II), Zr(II), Fe(II), Fe(III), V(III), V(II), Co(II), Mn(II), Ca(II), Mg(II), Ba(II), Sr(II), Cd(II), Cu(II) und/oder Pb(II) mit Liganden, ausgewählt aus Ammoniak oder organischen Aminen, wobei der Gesamtfeststoffgehalt der Masse 50 bis 90 Gew.-% beträgt, und wobei das Gewichtsverhältnis von Pigment zu Bindemittel 1:1 bis 5:1 ist, und wobei ferner der pH der Masse größber ist als 9,5.

2. Masse nach Anspruch 1, wobei der Gesamtfeststoffgehalt der Masse 60 bis 85 Gew.-% beträgt.

3. Masse nach Anspruch 1 oder 2, wobei das mehrwertige Metall aus einem Übergangsmetall besteht.

4. Masse nach Anspruch 3, wobei das Übergangsmetall aus Zink besteht.

9

5. Masse nach Anspruch 4, wobei das wasserlösliche Salz aus Zinkammoniumbicarbonat, Zinkammoniumnitrat und/oder Zinkammoniumacetate besteht.

6. Masse nach einem der vorhergehenden Ansprüche, wobei der pH der Masse wenigstens 10,0, vorzugsweise ungefähr 10,3, beträgt.

7. Masse nach einem der vorhergehenden Ansprüche, wobei das Gewichtsverhältnis von Pigment zu Bindemittel 1:1 bis 4:1 beträgt.

8. Masse nach einem der vorhergehenden Ansprüche, wobei das anionischen Polymerdispergiermittel aus einem Polyphosphat und/oder einem Acrylpolymeren, vorzugsweise einem Copolymeren von Acrylsäure und/oder Methacrylsäure mit einem Alkylacrylatmonomeren, besteht.

9. Masse nach einem der vorhergehenden Ansprüche, die für eine Verwendung als Dachabdichtungsmasse geeignet ist, wobei das Verhältnis Pigment : Bindemittel 1:1 bis 3:1 beträgt.

10. Verfahren zum Beschichten oder Abdichten einer äußeren Oberfläche oder Naht durch Aufbringen einer Beschichtungs- oder Abdichtungsmasse gemäß einem der Ansprüche 1 bis 8 auf eine äußere Oberfläche oder Naht.

**Revendications**

1. Composition de revêtement ou d'étanchéité comprenant une dispersion aqueuse d'un liant, qui est un latex en polymère insoluble dans l'eau préparé par polymérisation en émulsion, d'un pigment dispersé avec un polymère anionique et d'un sel soluble dans l'eau d'un ion complexe de métal multivalent de Zn(II), Zr(II), Fe(II), Fe(III), V(III), V(II), Co(II), Mn(II), Ca(II), Mg(II), Ba(II), Sr(II), Cd(II), Cu(II) et/ou Pb(III) ayant des ligands choisis parmi "ammoniac ou une amine organique, la teneur em matières sèches totales de la composition étant de 50% à 90% en poids, et la rapport pondéral du pigment au liant étant de 1/1 à 5/1 et le pH de la composition étant supérieur à 9,5.

2. Composition selon la revendication 1 dans laquelle la teneur totale en matières sèches de la composition est de 60% à 85% en poids.

3. Composition selon la revendication 1 ou la revendication 2 dans laquelle le métal multivalent comprend un métal de transition.

4. Composition selon la revendication 3 dans laquelle le métal de transition est le zinc.

5. Composition selon la revendication 4 dans laquelle le sel soluble dans l'eau comprend le bicarbonate de zinc et d'ammonium, le nitrate de zinc et d'ammonium et/ou l'acétate de zinc et d'ammonium.

6. Composition selon l'une quelconque des revendications précédentes dans laquelle le pH de la composition est d'au moins 10,0, de préférence d'environ 10,3.

7. Composition selon l'une quelconque des revendications précédentes dans laquelle le rapport pondéral du pigment au liant est de 1/1 à 4/1.

8. Composition selon l'une quelconque des revendications précédentes dans laquelle le dispersant polymère anionique comprend un polyphosphate et/ou un polymère acrylique, de préférence un copolymère d'acide acrylique et/ou méthacrylique avec un acrylate d'alcoyle monomère.

9. Composition selon l'une quelconque des revendications précédentes appropriée à l'utilisation comme mastic pour toiture, dans laquelle le rapport du pigment au liant est de 1/1 à 3/1.

10. Procédé de revêtement ou d'établissement de l'étanchéité d'une surface ou d'un joint extérieur par application à une surface ou un joint extérieur de la composition de revêtement ou d'étanchéité selon l'une quelconque des revendications 1 à 8.